# EUROPÄISCHE PATENTANMELDUNG

(11) **EP 0 738 057 A2**
(43) Veröffentlichungstag der Anmeldung: **16.10.1996**
(21) Anmeldenummer: 96105212.3
(22) Anmeldetag: 01.04.1996
(51) Int. Cl.: H04L 7/04, H04L 7/033

(54) **Verfahren und Anordnung zur Bitsynchronisation**

(30) Priorität: 12.04.1995 DE 19513955
(71) Anmelder: SIEMENS AKTIENGESELLSCHAFT, 80333 München (DE)
(72) Erfinder: Bolze, Thomas, Dr. Ing., 80804 München (DE); Sommer, Jörg, Dipl.-Ing., 81379 München (DE)

(57) **Zusammenfassung**

Bei Punkt-zu-Multipunkt-Übertragungsstrecken werden die von den Teilnehmern an eine Zentrale gesendeter Burstsignale aufgrund unterschiedlicher Entfernung mit unterschiedlicher Phasenlage und unterschiedlicher Amplitude empfangen. Zur Erkennung der Phasenlage dient eine, dem eigentlichen Nutzsignal vorangestellte Präambel mit einer Dauer von etwa 10 bis 40 Bitperioden, die zu kurz für den Betrieb üblicher Phasenregelschleifen hoher Güte ist. Erfindungsgemäß wird in parallelen Signalkanälen entweder das empfangene Burstsignal von stufenweise verzögerten Taktsignalen oder das unverzögerte Taktsignal mit stufenweise verzögerten Burstsignalen abgetastet. Die erzeugten Abtastsignale jeweils benachbarter Kanäle modulo-2-addiert, so daß sich ein Summensignal ergibt, in dem entsprechend den Pegeländerungen im Empfangssignal logische Eins-Impulse auftreten, die zur Steuerung eines Umschalters verwendet werden

## Beschreibung

Die Erfindung betrifft ein Verfahren zur Phasensynchronisation der Bits eines digitalen Signals entsprechend dem Oberbegriff des Anspruchs 1 und eine Anordnung zur Durchführung des Verfahrens.

Bei Punkt-zu-Multipunkt-Übertragungsstrecken, wie beispielsweise passive optische Netze, Koaxialkabelstrecken oder Funkstrecken mit Rückkanal kommunizieren mehrere Teilnehmer mit einer Zentrale. Anstelle eines zeitkontinuierlichen Datenstroms werden dabei von den Teilnehmern allgemein als Bursts oder Burstsignale bezeichnete Blöcke von Nutzdaten im Zeit-Vielfachzugriff(TDMA) gesendet. Wegen der unterschiedlichen Entfernung der Teilnehmer von der Zentrale und der damit unterschiedlichen Signaldämpfung und Signallaufzeit treffen die Datenblöcke beim Empfänger mit unterschiedlicher Signalamplitude und unterschiedlicher Taktphase ein, wobei die Bitfolgefrequenz für alle Teilnehmer gleich ist. Der Empfänger muß daher zu Beginn eines jeden Burstsignals den Takt möglichst rasch zurückgewinnen, wobei sich dies auf die Bestimmung der Phasenlage der Bits der in den einzelnen Burstsignalen enthaltenen digitalen Signale bezieht. Für eine schnelle Taktrückgewinnung werden die Datenblöcke bisher nach einem Code gebildet, der wie beispielsweise der CMI-Code, reichlich Taktinformation enthält. Zur Erleichterung der Synchronisierung wird in der Regel eine dem Nutzsignal vorangestellte Präambel gesendet, die typischerweise 10 bis 40 Bit umfaßt und hauptsächlich der empfangsseitigen Taktrückgewinnung sowie der Einmessung zu Betriebsbeginn dient. Das Problem bei der empfangsseitigen Rückgewinnung der Taktphase besteht dabei darin, daß dafür nur die vergleichsweise kurze Präambel zur Verfügung steht und damit herkömmliche Verfahren mit Phasenregelschleifen hoher Güte wegen deren hoher Einschwingzeit nicht verwendet werden können. Auch kann im Hinblick auf eine sichere Taktrückgewinnung die Dauer der Präambel nicht beliebig verlängert werden, da dies auf Kosten der Übertragungskapazität für die Nutzsignale geht. Weitere Probleme ergeben sich dadurch, daß bei Verwendung des CMI-Codes zwar reichlich Taktinformation zur Verfügung steht, sich aber auch Schrittgeschwindigkeit und Signalbandbreite verdoppeln und damit die Empfängerempfindlichkeit und bei begrenzter zur Verfügung stehender Bandbreite auch die Zahl der Nutzsignale verringert, während sich die benötigte Signalverarbeitungsgeschwindigkeit verdoppelt. Ein weiteres Problem ergibt sich bei hohen Übertragungsgeschwindigkeiten dadurch, daß die Laufzeiten innerhalb der Schaltung und damit die Taktphasen unterschiedlich sein können oder sich auch einzelne Teile der Schaltungsanordnung im Betrieb unterschiedlich erwärmen können. Wegen dieser Probleme und auch im Hinblick auf eine Verringerung des Aufwandes ist eine Schaltungsanordnung zur Bitphasensynchronisation erforderlich, die ohne Verwendung von induktiven oder kapazitiven Bauteilen aufgebaut werden kann.

Die Aufgabe der Erfindung besteht also darin, ein Verfahren der eingangs erwähnten Art so weiterzubilden, daß es auch bei vergleichsweise kurzen Präambeln und bei einer vom CMI-Code abweichenden Codierung also beispielsweise bei NRZ-Codes eine Bitphasensynchronisation mittels einer integrierten Schaltung ermöglicht.

Erfindungsgemäß wird die Aufgabe durch ein Verfahren der eingangs erwähnten Art gelöst, das durch die Merkmale des Kennzeichens des Anspruchs 1 weitergebildet ist. Der Vorteil des erfindungsgemäßen Verfahrens liegt darin, daß mit geringem Aufwand eine Möglichkeit geschaffen wurde, Übertragungssignale mit vergleichsweise geringer Bandbreite in Bursts zu übertragen und die Bestimmung der Taktphase mittels digitaler Verfahren zu ermöglichen. Zweckmäßige Weiterbildungen des erfindungsgemäßen Verfahrens sind in den Patentansprüchen 2 bis 4 beschrieben, eine integrierbare Anordnung zur Durchführung des Verfahrens ist in den Patentansprüchen 6 und 7 näher beschrieben.

Die Erfindung soll im folgenden anhand eines in der Zeichnung dargestellten Ausführungsbeispiels näher erläutert werden. Dabei zeigt:
- Figur 1: eine erfindungsgemäße Anordnung zur Taktphasenrückgewinnung und
- Figur 2: die Abtastung des empfangenen Datensignals in der Anordnung nach Figur 1.

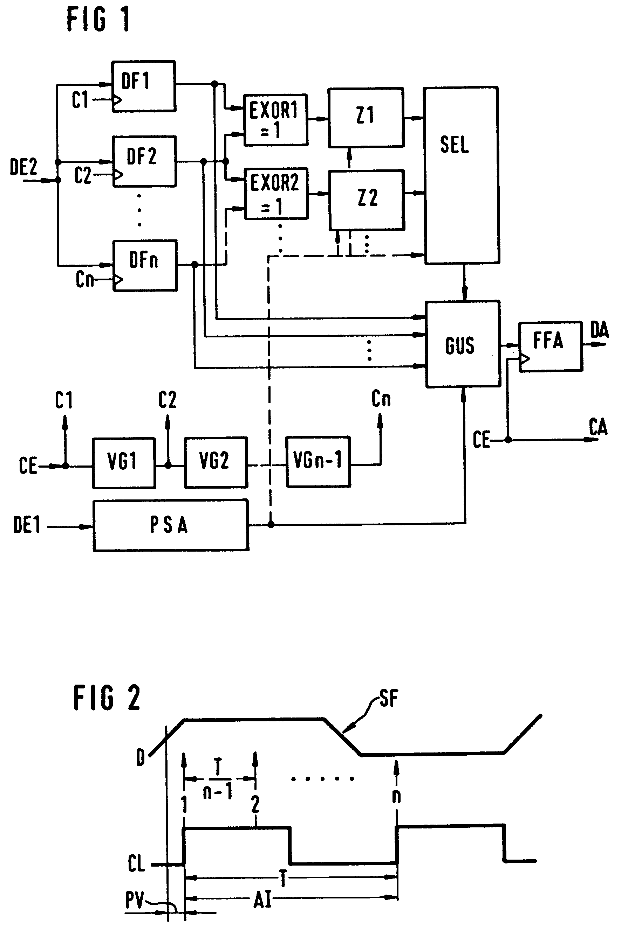

Die in der Figur 1 dargestellte Anordnung zur Phasensynchronisation der Bits eines digitalen Signals enthält eingangsseitig eine Pilotsignalauswertung PSA, deren Eingang mit einem ersten Signaleingang DE1 und deren Ausgang mit Steuereingängen eines gesteuerten Umschalters GUS, einer Auswahlschaltung SEL und Binärzählern Z1, Z2 verbunden ist. Mit einem zweiten Signaleingang DE2 sind die D-Eingänge einer Gruppe von D-Flip-Flops DF1 ... DFn verbunden. Der erste und der zweite Signaleingang DE1, DE2 sind an eine Quelle für Burstsignale angeschlossen, dabei kann es sich um den Ausgang des Fotostromverstärkers einer Übertragungsstrecke für optische Signale handeln, es kann sich auch um den Ausgang eines Funkempfängers oder einer Koaxialkabelstrecke handeln. Voraussetzung für die Funktion der Anordnung nach der Figur 1 ist der Empfang eines Burstsignals, der durch den Empfang eines Pilotsignals gefolgt von einer die Taktphaseninformation enthaltenden Präambel mit einer Länge von etwa 10 bis 40 Bitperioden eingeleitet wird. Voraussetzung ist weiterhin, daß ein dem Taktsignal der empfangenen Präambel und damit den Taktsignalen der zu übertragenden digitalen Signale frequenzgleicher Takt im Empfänger zur Verfügung steht, dessen Phase als Referenzphase dienen kann. Mit einem Anschluß CE für diesen Zentraltakt ist die Reihenschaltung einer Anzahl von Verzögerungsgliedern VG1 ... VGn-1 verbunden, einzelne Anschlüsse dieser Reihenschaltung sind mit den Takteingängen der n D-Flip-Flops DF1 ... DFn verbunden. Dabei ist der Eingangsanschluß CE für den Zentraltakt als Referenztakt mit dem Takteingang des ersten D-Flip-Flops DF1, der Takteingang des zweiten D-Flip-Flops DF2 ist mit dem Ausgang des ersten Verzögerungsgliedes VG1 und entsprechend der Takteingang des n-ten D-Flip-Flops DFn ist mit dem Ausgangsanschluß des n-1-sten Verzögerungsgliedes VGn-1 verbunden, so daß an den Takteingängen benachbarter D-Flip-Flops jeweils um eine Stufe zueinander verzögerte Taktsignale anstehen. Wahlweise mit den nichtinvertierenden oder den invertierenden Ausgängen der D-Flip-Flops sind die Signaleingänge eines gesteuerten Umschalters GUS verbunden, außerdem sind diese Ausgänge mit den Eingängen nachgeschalteter Exklusiv-ODER-Gatter EXOR1, 2... verbunden. Dabei sind mit den Eingangsanschlüssen jeweils eines Exklusiv-ODER-Gatters die Ausgangsanschlüsse jeweils benachbarter D-Flip-Flops so verbunden, daß der Ausgangsanschluß des ersten D-Flip-Flops DF1 mit dem ersten und der Ausgangsanschluß des zweiten D-Flip-Flops DF2 mit dem zweiten Eingang des ersten Exklusiv-ODER-Gatters ExOR1 verbunden ist, weiterhin ist der Ausgangsanschluß des zweiten D-Flip-Flops DF2 mit dem einen und der Ausgangsanschluß des dritten D-Flip-Flops DF3 mit dem anderen Eingang des zweiten Exklusiv-ODER-Gatters ExOR2 so verbunden, daß jeweils in den Exklusiv-ODER-Gattern die Ausgangssignale der jeweils einen Signalkanal bildenden D-Flip-Flops miteinander modulo-2-addiert, also miteinander verglichen werden. Das Vergleichsergebnis des ersten Exklusiv-ODER-Gatters EXOR1 wird über dessen Ausgang an den Zähleingang eines ersten Binärzählers Z1 abgegeben, der die auftretenden logischen Eins-Impulse zählt; entsprechend sind die Ausgänge des zweiten und weiterer Exklusiv-ODER-Gatter EXOR2... mit Zähleingängen weiterer Binärzähler Z2... verbunden. Die Zählergebnisse der Binärzähler Z1, Z2... werden an Signaleingänge einer Auswahlschaltung SEL abgegeben, die innerhalb der für den Empfang der Präambel vorgesehenen Zeit die Zählergebnisse miteinander vergleicht und ein Steuersignal an den zweiten Steuersignaleingang des gesteuerten Umschalters GUS abgibt, durch dieses Steuersignal schaltet dieser Umschalter das Ausgangssignal desjenigen D-Flip-Flops DF1 ... DFn zum Umschalterausgang durch, das um eine halbe Taktperiode gegenüber dem D-Flip-Flop verschoben ist, in dem die größte Zahl Signalflanken und damit an logischen Eins-Impulsen auftritt. Die Veränderung des Steuersignals erfolgt nur während des Empfangs der Präambel bzw. führt nur in einer entsprechenden Zeit nach Empfang Pilotsignals durch die Pilotsignalauswertung PSA zu einer Veränderung der Zuordnung. Nach dem Empfang der Präambel und damit während des Empfangs der digitalen Nutzsignale passieren diese denjenigen Signalweg, in dem die sich jeweils phasenversetzte Abtastung in den D-Flip-Flops durch die Taktsignale zu dem jeweils optimalen Abtastwert führt.

Vom gesteuerten Umschalter GUS wird bereits ein digitales Signal abgegeben, das für die weitere Signalverarbeitung verwendbar ist, die Phase der Bits dieses Signals wird dabei zwischen der Phase der Bits des Empfangssignals und der Phase des Referenztaktes liegen. Zur weiteren Angleichung der Phase der digitalen Signale an den Zentraltakt kann dem Ausgang des gesteuerten Umschalters GUS ein Ausgangs-Flip-Flop FFA nachgeschaltet werden, das ebenfalls als D-Flip-Flop aufgebaut ist und dessen D-Eingang mit dem Ausgang des gesteuerten Umschalters und dessen Takteingang mit dem Eingang CE für den Zentraltakt sowie mit einem Ausgangsanschluß CA für den Zentraltakt verbunden ist. Durch die erneute Abtastung der digitalen Signale mit dem Zentraltakt wird ein digitales Ausgangssignal erzeugt, dessen Bits nunmehr zur Phase des Zentraltaktes besser synchron sind und das am Datenausgang DA zur Verfügung steht.

Die Funktion der Schaltungsanordnung nach der Figur 1 soll im folgenden in Verbindung mit der Figur 2 näher erläutert werden. In der Figur 2 sind übereinander ein empfangenes digitales Signal D im NRZ-Format und darunter ein Referenztaktsignal CL dargestellt. Zwischen dem Beginn beider Signale besteht ein Phasenversatz PV, der dazu führen kann, daß eine Abtastung des Empfangssignals mit dem Referenztakt nicht zur Erzeugung eines phasenregenerierten Bits führt. Das Empfangssignal wird deshalb unverzögert gleichzeitig an die D-Flip-Flops abgegeben, die jeweils einen Signalkanal darstellen, dessen Durchlaß durch das anliegende Taktsignal gesteuert wird. Die Erzeugung der verzögerten Taktsignale durch die Verzögerungsglieder erfolgt so, daß die Verzögerung wenigstens dem Quotienten aus der Taktperiode geteilt durch die um eins verringerte Anzahl der Signalkanäle entspricht. Die an den D-Flip-Flops anliegenden Taktsignale sind also gegenüber dem Referenztakt jeweils stufenweise verzögert, wobei die an benachbarten D-Flip-Flops anliegenden Taktsignale jeweils um eine Stufe unterschiedliche Verzögerungen aufweisen. Die Summe der Verzögerungszeiten der einzelnen Stufen stellt das Abtastintervall AI dar, das sich über mindestens eine Taktperiode erstrecken muß, damit mit Sicherheit eine Datensignalflanke SF erkannt werden kann. Ist das Abtastintervall AI deutlich länger als die Taktperiode, so können hierbei mehrere Flanken innerhalb dieses Abtastintervalls detektiert werden, was beim Aufbau der Auswahlschaltung SEL berücksichtigt werden muß. Durch die Auswahlschaltung SEL wird letztendlich derjenige Signalkanal ausgesucht, in dem ein Taktsignal mit einer solchen Verzögerung auftritt, daß eine Flanke des Datensignals durch das Taktsignal erkannt werden kann. Wenn eine derartige Datenflanke in einem Signalkanal gefunden ist, sind die logischen Pegel aufeinanderfolgender Abtastsignale, also das Abtastsignal für diesen Signalkanal sowie den vorhergehenden und den folgenden Signalkanal verschieden und damit auch die Ausgangssignale benachbarter D-Flip-Flops . Der Pegelvergleich zur Erkennung dieses Unterschiedes erfolgt durch modulo-2-Addition der Ausgangssignale benachbarter D-Flip-Flops durch die Exklusiv-ODER-Gatter, an deren Ausgängen eine entsprechende Pegeländerung auftritt. Diese Pegeländerung wird durch die Binärzähler gezählt und das Zählergebnis in der Auswahlschaltung SEL in ein Steuersignal umgewandelt.

Bei einer Variante der Schaltungsanordnung nach der Figur 1 wird nicht ein zentrales Taktsignal als Referenztakt sondern das jeweils empfangene Burstsignal stufenweise verzögert. In diesem Fall sind also die Anschlüsse CE für das Taktsignal und der zweite Dateneingang DE2 miteinander vertauscht und das empfangene Burstsignal dient zur Taktierung der D-Flip-Flops.

Im Hinblick auf das Auftreten von Störungen im Übertragungsweg ist es wünschenswert, die Schaltungsanordnung nach der Figur 1 erst dann zu aktivieren, wenn tatsächlich ein Burstsignal an den Signaleingängen ansteht. Eine Möglichkeit zur Erkennung eines Burstsignals ist bei geeigneter Codierung die Überwachung des Empfangssignals auf einen Pegelanstieg, der deutlich über den maximalen Rauschpegel und länger als auftretende Störungen sein muß. Beim Ausführungsbeispiel nach der Figur 1 wurde eine alternative Methode gewählt, in dem sendeseitig vor dem Burstsignal ein Pilotsignal ausgesendet wird. Dieses Pilotsignal kann als Sinussignal oder als Folge von 0-Bits und 1-Bits auftreten, wesentlich ist das Auftreten einer markanten Spektrallinie bei einer bestimmten Frequenz, auf die dann ein in einer Pilotsignalauswertung PSA enthaltener Schwingkreis eingestellt wird und nach vergleichsweise sehr kurzer Einschwingzeit ein Steuersignal an den gesteuerten Umschalter GUS und ggf. auch an die Auswahlschaltung SEL abgibt. Auch kann es sinnvoll sein, sendeseitig ein zweites Pilotsignal nach dem Ende des Burstsignals auszusenden, das ebenfalls in der Pilotsignalauswertung erkannt wird und zu einer Deaktivierung des gesteuerten Umschalters GUS und der Auswahlschaltung SEL führt.

## Patentansprüche

1. Verfahren zur Phasensynchronisierung der Bits eines in einem empfangenen Burstsignal einer Punkt-zu-Multipunktverbindung enthaltenen digitalen Signals durch Auswertung einer dem digitalen Signal vorangestellten Präambel,
**dadurch gekennzeichnet,**
daß ein zentrales Taktsignal mit einer der Taktfrequenz der digitalen Signale entsprechenden Taktfrequenz erzeugt wird, daß aus dem zentralen Taktsignal eine Mehrzahl von Taktsignalen mit zueinander stufenweise ansteigender Verzögerung erzeugt werden und dabei zur Erfassung aller innerhalb einer Taktperiode auftretenden Datensignalflanken die Summe der Stufen entsprechend jeweils einem Abtastintervall insgesamt gleich oder wenig größer als die Bitperiode des digitalen Signals ist,
daß das empfangene Burstsignal durch das unverzögerte zentrale Taktsignal und die stufenweise verzögerten Taktsignale in parallelen Kanälen abgetastet wird und dadurch Abtastsignale erzeugt werden,
daß die Abtastsignale jeweils unmittelbar benachbarter Kanäle miteinander modulo-2-addiert werden und dadurch ein Summensignal erzeugt wird,
daß im Summensignal auftretende logische Eins-Impulse gezählt werden und derjenige Kanal ermittelt wird, in dem das höchste Zählergebnis entsprechend der höchsten Zahl an Signalflanken auftritt,
daß der zu diesem Kanal um eine halbe Taktperiode verschobene Kanal zum Datenausgang durchgeschaltet wird und daß diese Durchschaltung nur während des Empfangs der Präambel verändert wird.

2. Verfahren nach Patentanspruch 1,
**dadurch gekennzeichnet,**
daß anstelle des zentralen Taktsignals jeweils das empfangene Burstsignal stufenweise verzögert wird, so daß in den parallelen Kanälen das Burstsignal und die von diesem abgeleiteten stufenweise verzögerten Burstsignale durch das unverzögerte zentrale Taktsignal abgetastet werden.

3. Verfahren nach Ansprüchen 1 oder 2,
**dadurch gekennzeichnet,**
daß der Beginn des Burstsignals durch Überwachung des geeignet codierten Empfangssignals auf einen Pegelanstieg erkannt wird.

4. Verfahren nach Ansprüchen 1 oder 2,
**dadurch gekennzeichnet,**
daß der Beginn des Burstsignals durch Auswertung eines vor der Präambel empfangenen ersten Pilotsignals erkannt wird.

5. Verfahren nach Ansprüchen 1, 2 oder 4,
**dadurch gekennzeichnet,**
daß das Ende des Burstsignals durch Auswertung eines sich an das Burstsignal anschließenden zweiten Pilotsignals erkannt wird.

6. Anordnung zur Durchführung des Verfahrens nach den Ansprüchen 1 bis 5,
**dadurch gekennzeichnet,**
daß an einem Takteingang (TE) eine Mehrzahl in Serie geschalteter Verzögerungsglieder (VG1 ... VGn-1) angeschlossen sind, daß an einen zentralen Dateneingang (DE), der mit einem Empfänger für Burstsignale verbunden ist, die parallelgeschalteten D-Eingänge einer Mehrzahl von D-Flip-Flops (DF1... DFn) verbunden sind, deren Takteingänge mit Anschlüssen der Einschaltungen von Verzögerungsgliedern (VG1...VGn) so verbunden sind, daß der Takteingang des ersten D-Flip-Flops (DF1) mit dem zentralen Takteingang (CE) und der Takteingang des zweiten D-Flip-Flops (DF2) mit dem Ausgang des ersten Verzögerungsgliedes (VG1) verbunden ist,
daß der Takteingang des dritten D-Flip-Flops (DF3) mit dem Ausgang des zweiten Verzögerungsgliedes (VG2) und der Takteingang des n-ten D-Flip-Flops (DFn) mit dem Ausgang des n minus ersten Verzögerungsgliedes (VGn-1) verbunden ist, das wahlweise die nichtinvertierenden oder die invertierenden Ausgänge der D-Flip-Flops benachbarter Kanäle jeweils mit den Eingängen eines nachgeschalteten Exklusiv-ODER-Gatters (EXOR1...) so verbunden sind, daß die nichtinvertierenden Ausgänge des ersten und des zweiten D-Flip-Flops (DF1, DF2) mit den Eingängen eines ersten Exklusiv-ODER-Gatters (EXOR1) verbunden sind,
daß die nichtinvertierenden Ausgänge des zweiten und des dritten D-Flip-Flops (DF2, DF3) mit den Eingängen eines zweiten Exklusiv-ODER-Gatters (EXOR2) und die Ausgänge des n minus ersten und des n-ten D-Flip-Flops (DFn-1, DFn) mit den Eingängen eines n minus ersten Exklusiv-ODER-Gatters (EXOR n-1) verbunden sind,
daß mit den Ausgängen der Exklusiv-ODER-Gatter die Zähleingänge von Binärzählern (Z1, Z2) und deren Ausgänge mit den Eingängen einer Auswahlschaltung (SEL) verbunden sind, die über ihren Ausgang mit dem Steuereingang eines gesteuerten Umschalters (GUS) verbunden ist,
daß die mit den Eingängen der Exklusiv-ODER-Gatter verbundenen Ausgänge der D-Flip-Flops (DF1 ... DFn) mit Signaleingängen des gesteuerten Umschalters (GUS) verbunden sind und dessen Ausgang mit einem Datenausgang (DA) verbunden ist.

7. Anordnung nach Patentanspruch 6,
**dadurch gekennzeichnet,**
daß mit dem Ausgang des gesteuerten Umschalters (GUS) ein Eingang eines Ausgangs-Flip-Flops (FFA) verbunden ist, dessen Takteingang mit dem Eingang (CE) für den zentralen Takt und mit dem Taktausgang (CA) verbunden ist und dessen nichtinvertierender oder invertierender Ausgang mit dem Datenausgang (DA) verbunden ist.
